# EUROPEAN PATENT APPLICATION

(11) **EP 4 312 113 A1**
(43) Date of publication of application: **31.01.2024**
(21) Application number: 22186753.4
(22) Date of filing: 25.07.2022
(51) Int. Cl.: G06F 3/04842, G06F 3/04845, G06F 3/01, H04N 7/15

(54) **METHOD FOR PROCESSING A GRAPHICALLY DISPLAYABLE OBJECT BY AT LEAST TWO USERS, SYSTEM FOR PROCESSING THE GRAPHICALLY DISPLAYABLE OBJECT BY THE USERS, COMPUTER PROGRAM AND STORAGE MEDIUM**

(71) Applicant: Siemens Aktiengesellschaft, 80333 München (DE)
(72) Inventor: Votintseva, Anjelika, 81735 München (DE); Kaiser, Fritjof, 85579 Neubiberg (DE)
(74) Representative: Siemens Patent Attorneys

(57) **Abstract**

The invention relates to a Method for processing a graphically representable object (10) by at least two users. Furthermore, the invention relates to a system, a computer program and a storage medium.

## Description

The invention relates to a method for processing a graphically representable object by at least two users according to claim 1. Furthermore, the invention relates to a system for processing a graphically representable object by at least two users according to claim 9. Finally, the invention relates to a computer program according to claim 10 and a storage medium according to claim 11.

It can be efficient if several users or colleagues can process a document together. For example, there are concepts for the joint processing of tables or text documents in which all participants see the same view and an extra view is not available for each individual participant. For the processing of text documents, tables or whiteboards with texts and pictures such a representation is advantageous. However, such a representation is not beneficial for improving a Knowledge Graph, especially if additional human knowledge is to be used. Therefore, such technical objects can currently only be performed by technical professionals with specialized knowledge, limiting the potential of true collaborative work and collective intelligence.

In the case of the aforementioned documents, individual objects can often not be locked for participants during collaborative work, which can lead to conflicts in the collaboration and make it inefficient. In addition, some applications allow parts to be locked for participants, but this results in other participants not seeing their colleagues' editing contributions. In this case, the locking mechanism is not flexible, as it is started and stopped by the participant himself, which can sometimes lead to a long lockout, as it is difficult for other participants to unlock needed parts.

The object of the present invention is to provide a method for processing a graphically representable object, as well as a system for processing a graphically representable object, a computer program, and a storage medium, by which the aforementioned problems of the prior art do not occur and by which advantageous processing by several users on a plurality of graphically representable objects is made possible.

This object is solved according to the invention by the subject matter of the independent patent claims. Advantageous embodiments and further embodiments of the invention are indicated in the dependent patent claims as well as in the description and in the drawing.

A first aspect of the invention relates to a method for processing a graphically displayable object by at least two users, the method comprising a plurality of steps:
- Importing a file containing the graphically displayable object by a computing device;
- Displaying at least a respective region of the object on at least two separate display devices;
- Detecting, via a first input device (16), a user input performed by a first of said at least two users, wherein a portion of the object is selected by that first user;
- Coloring the part and/or its surroundings in a color associated with the first user in the at least one further display device of the at least one further user; and
- Blocking the area for processing through the at least one second user.

The import can be carried out, for example, from the memory of a computing device and/or via a communication network containing the graphical displayable object by a control device which is configured in particular as the computing device.

The display devices are each configured individually and may be located in particular at different locations, for example in different rooms separated from each other. The display devices are controlled in particular by the control device and/or a further control device connected thereto for displaying the respective region.

The detection is performed by means of the first input device on the basis of the user input, in which an area on the object is touched and/or selected by the first user. In other words, in particular the respective user who wants to process the object has an input device available through which he can interact with the object, for example he can select areas of the object by means of a search function or touch them, for example, depending on the type of input device.

In the fourth step, the object is displayed at least in the at least one further display device in such a way that the part selected by the first user on the basis of the user input is marked, in particular in color, in such a way that this can be displayed by the display device. The part first marked by the first user by means of the input device is reserved for processing, so that the method effectively prevents simultaneous processing of the part of the object by several users.

The method thus creates the possibility for several persons or users, who in particular work from different physical and/or logical locations, to collaboratively access a common object, which is available, for example, as an input file or repository and comprises various digital artifacts, such as a knowledge graph, via a VR (virtual reality) or AR (augmented reality) environment.

The invention is based on the realization that several people may want to process and/or update a common model, such as a knowledge graph or other graphical representation, simultaneously from different locations. This is the essence of collaborative work, where synergies of collective intelligence can be exploited. However, if two or more people want to modify the same object or part of the object, conflicts may arise, which is advantageously prevented by the method according to the invention.

Furthermore, a problem with the graphical representation of knowledge graphs is that they are often created automatically by AI algorithms and are rarely easy for humans to understand. Thereby, especially for the graphical representation of a knowledge graph, some parts of IT (information technology) are too specific or have too little input to properly train AI (artificial intelligence) algorithms. Therefore, some parts still need updating or processing by humans.

However, for this updating to be effective, the graphical representations of the object should be made understandable to humans. This is usually a challenge because different people have different backgrounds that affect their understanding. In order to make the contribution of multiple people involved effective, the representation must be adapted advantageously for each user, for which the respective display device can be provided. Furthermore, in order to collaborate in parallel, users want to see who else is involved in updating each part of the model or object and how long it may take to process accordingly. The automatic coloring and locking of the method according to the invention can counteract the problems mentioned.

In one embodiment of the invention, the color and/or the lock disappear, in particular slowly, after a predetermined time and/or in dependence on further user input by means of the first input device and thus in particular by the first user. In other words, the coloring can be considered analogous to marking an object with pheromones in an environment, which, for example, settle on the object and become less and disappear over time. Thus, the color may fade over time, making it visible to the at least one other user that the lock is approaching its end and thus processing by the other user can occur as the first user finishes his processing. This results in the advantage that the method can be used particularly effectively for processing the graphically displayable object.

In a further embodiment of the invention, the at least two display devices are configured as a VR headset and/or an AR headset and thus the object is displayed in a virtual space and/or in multiple virtual spaces and/or in at least one environment of the display device. In other words, the display device serves to generate a virtual image either in a virtual environment and/or in an augmented environment. In this regard, the users may additionally be represented as avatars. Additionally or alternatively, the object may be displayed in multiple virtual spaces, such that each user may be in a separate virtual space, for example. Furthermore, working groups can be formed in this way if there are more than two users. When the object is displayed in an environment of the display device, augmented reality is used to display the object, whereby the environment can be located at the respective display devices that are separate from each other. This results in the advantage that the method can be used particularly flexibly.

In a further embodiment of the invention, the first input device of the first user and/or at least one further input device of a further one of the at least two users are each configured as a controller and/or data glove. In other words, one of the respective input devices is provided with sensors which can, in particular, detect the position in space, thereby enabling, for example, manipulation of the object by means of gestures. This results in the advantage that the method can be carried out in a particularly user-friendly manner.

In a further embodiment of the invention, the selection of the part and/or at least one further part of the object is performed by a gesture of the respective user with the respective input device. In other words, a gesture control is made possible by which the respective user can mark at least the part or several parts of the object, in particular simultaneously, in order to block them for processing. This results in the advantage that the user can interact advantageously with multiple parts.

In a further embodiment of the invention, the object is a graph, in particular a knowledge graph, and/or a mind map and/or is written in the Unified Modeling Language and/or can be represented by at least two alternative representational forms. In other words, different structural data can be prepared graphically in different ways. This results in the advantage that a respective user can choose from one form of representation. Additionally or alternatively, a further advantage is that the object can be used particularly advantageously for displaying information.

In a further embodiment of the invention, the representational form and/or the color and/or a blocking time and/or an avatar and/or a virtual room are selected for one of the users by means of artificial intelligence or a self-learning algorithm and/or neural network. In other words, when performing the method, a self-learning algorithm observes the users and processes which individual selection the respective user makes. Additionally or alternatively, the AI accesses, for example, social media profiles of the user. For example, different user profiles can be accessed so that, for example, a respective display form is adjusted to a background knowledge of the user. The information gained from this can be used to save user input. This has the advantage that the process can be used particularly conveniently for a user.

In a further embodiment of the invention, the second user and/or a further user can mark the area colored by the first user, whereby a request signal is transmitted to the first user. In particular, the request signal can be represented, for example, as an icon or marking on the object. Additionally or alternatively, the request signal can also be output haptically via the input device or the like. In this way, the second user or a further user can inform the first user about a processing request or a cooperation. This results in the advantage that the method can be used efficiently by multiple users.

A second aspect of the invention relates to a system which is configured for processing a graphically displayable object by at least two users and comprises a computing device, at least two display devices separated from each other and at least two input devices, wherein the system is configured for performing a method in accordance with the first aspect of the invention.

In this regard, advantages and advantageous embodiments of the first aspect of the invention are to be regarded as advantages and advantageous embodiments of the second aspect of the invention, and vice versa.

A third aspect of the invention relates to a computer program. The computer program may for example be loaded in a memory of a computing device of the mapping device, and comprises program means for executing the steps of the method when the computer program is executed in the computing device.

In this regard, advantages and advantageous embodiments of the third aspect of the invention are to be regarded as advantages and advantageous embodiments of both the second and the first aspect of the invention, and vice versa in each case.

A fourth aspect of the invention relates to a storage medium. The storage medium comprises electronically readable control information stored thereon, the control information comprising at least one computer program according to the second aspect of the invention and being configured to perform a method presented herein according to the first aspect of the invention when the storage medium is used in the computing device.

In this regard, advantages and advantageous embodiments of the fourth aspect of the invention are to be regarded as advantages and advantageous embodiments of the third, the second and the first aspect of the invention, and vice versa in each case.

The present invention can take a form of a computer program comprising program modules accessible from computer-usable or computer-readable medium storing program code for use by or in connection with one or more computers, processors, or instruction execution system. For the purpose of this description, a computer-usable or computer-readable medium can be any apparatus that can contain, store, communicate, propagate, or transport the program for use by or in connection with the instruction execution system, apparatus, or device. The medium can be electronic, magnetic, optical, electromagnetic, infrared, or semiconductor system (or apparatus or device) or a propagation mediums in and of themselves as signal carriers are not included in the definition of physical computer-readable medium include a semiconductor or solid state memory, magnetic tape, a removable computer diskette, random access memory (RAM), a read only memory (ROM), a rigid magnetic disk and optical disk such as compact disk read-only memory (CD-ROM), compact disk read/write, and DVD. Both processors and program code for implementing each aspect of the technology can be centralized or distributed (or a combination thereof) as known to those skilled in the art.

For use cases or use situations which may arise in carrying out the method and which are not explicitly described here, it may be provided that, in accordance with the method, an error message and/or a prompt for user feedback is output and/or a default setting and/or a predetermined initial state is set.

While the present invention has been described in detail with reference to certain embodiments, it should be appreciated that the present invention is not limited to those embodiments. In view of the present disclosure, many modifications and variations would be present themselves, to those skilled in the art without departing from the scope of the various embodiments of the present invention, as described herein. The scope of the present invention is, therefore, indicated by the following claims rather than by the foregoing description. All changes, modifications, and variations coming within the meaning and range of equivalency of the claims are to be considered within their scope. All advantageous embodiments claimed in method claims may also be apply to system/apparatus claims.

It shows:
FIG 1 schematic flowchart of a method for processing a graphically displayable object by at least two users; and
FIG 2 schematic view of a system for processing the graphically displayable object by the at least two users.

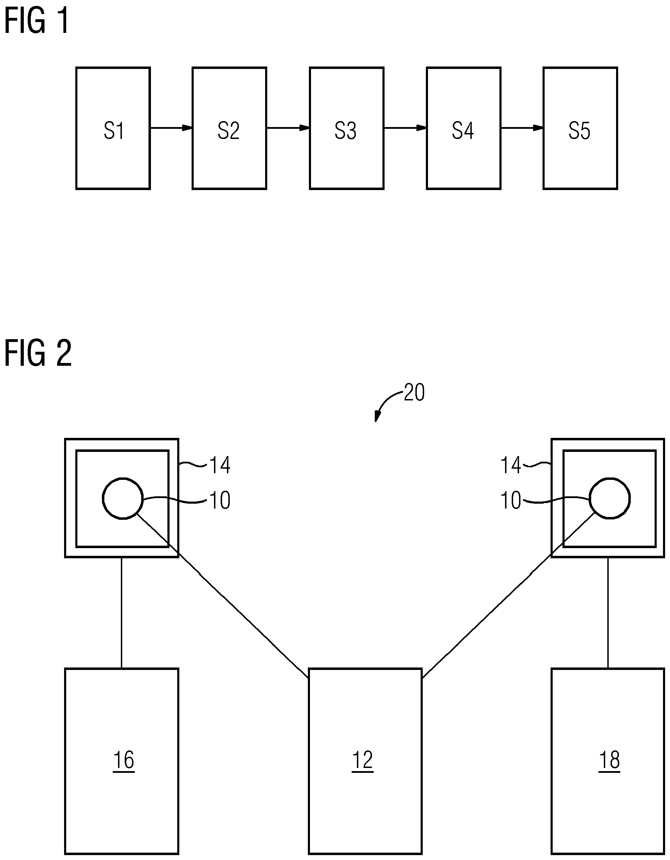

FIG 1 shows a schematic flowchart of a method for processing a graphically representable object by at least two users comprising several steps:
In a first step S1, a file containing the graphically representable object 10 is imported by a computing device 12, which is shown in FIG 2. In a second step S2, at least one respective region of the object is displayed on at least two separate display devices 14. In a third step S3, a user input is detected by means of a first input device 16 by a first of the at least two users, in which a part on the object 10 is marked by the first user. In a fourth step S4, a coloring of the part and/or from an environment in a color assigned to the first user takes place in the at least one further display device 14 of the at least one further user. In addition, in a fifth step S5 the part is blocked for processing by the at least one second user.

By using the method, several users, in particular from different physical locations, can access the object 10 or the data available for the object, which are imported in particular in step S1, via virtual and/or augmented reality environments.

For this purpose, it has been shown to be advantageous if the at least two display devices 14 are configured as a VR headset and/or as an AR headset and thus the object 10 is or are displayed in a virtual space and/or in several virtual spaces or in at least one environment of the display device 14.

In the virtual spaces, users may be presented virtually via avatars in one or more interconnected common spaces. Furthermore, this applies to the environment in which virtual images of the users can also be displayed. Furthermore, the method enables users in the room or environment to be seen as AR holograms if an AR view is used instead of the VR view.

Thus, the method can create the impression that several participants are almost physically working together. This allows them to see each other and capture what the others are working on, which improves remote communication. This is particularly valuable for educational purposes, for example.

A graph, especially a knowledge graph, can be represented in the shared virtual space as a series of, for example, 3D spheres and/or other two- or three-dimensional elements, depending on the preference of the particular user. Connections between the spheres may represent the relationship between the elements. The representation of the elements of the graph may be selected by the user from a set of available views and/or automatically computed from a profile of the user if the user allows access to, for example, a social profile, thereby enhancing the displayability of the entire graph to the current user. Each participating person sees the entire scene in their selected setting. When a user searches for a particular part of the graph by entering a search term, the relevant events of the search are displayed in the virtual space as larger objects 10, for instance.

The object 10 is a graph, in particular a knowledge graph, and/or a mind map and/or is written in the Unified Modeling Language and/or can be represented by at least two alternative representational forms.

Furthermore, it is advantageous if the color and/or the colored area and/or the blocking of the area of the object disappear after a predetermined time and/or in dependence on a further user input by means of the first input device 16, in particular slowly.

If the participant or user starts to process a part of the graph or the object 10, this part is marked by the color of the participant, that is, each element of this part is surrounded, for example, with a transparent color cloud, which has, for example, as properties in imitation of a pheromone that occurs in nature.

Such a color cloud or pheromone cloud may fade with time if the corresponding element or part is not marked and/or processed by the owner of this color by means of the input device. That is, the intensity of the pheromone cloud shows other users the current focus of processing by that particular first user. Other users can thus see if an area becomes free for other participants. The pheromone cloud protects processed parts from competing accesses and its especially automatic disappearance or hiding protects the elements from being locked for an unnecessarily long time. For example, after a certain time without user input or without touching the first user, the pheromone becomes weaker and thus the intensity of the color decreases, which can lead to automatic unlocking. Additionally or alternatively, a lockout time can be selected by a user. Users can be informed when the part or element is about to be released for processing.

Advantageously, the first input device 16 of the first user and/or at least one further input device 18 of a further user of the at least two users is configured as a controller and/or data glove, respectively. Whereby the latter is advantageously suitable for marking the part and/or at least one further part of the object 10 by a gesture of the respective user with the respective input device 16, 18. In other words, for example, a gesture reminiscent of a net throw can provide a method to select multiple parts of the graph at once. For example, these may also be selected from a menu. Additionally or alternatively, a specific gesture may be recognized by a camera or tracker of the headset or controller, respectively.

For example, both hands of a user can be moved around several parts to select them and color them accordingly. Another alternative to cast a net over a subset of the graph elements is eye tracking, for example by the camera sensors of VR headsets or AR headsets, respectively. This method can be used, for example, after an initial search, when some relevant parts are already pre-selected by other search methods and displayed near the user. This allows the user to select a subset of the parts for current processing.

Advantageously, an artificial intelligence is also provided, which selects the representational form and/or the color a blocking time and/or the avatar and/or the respective virtual space for one of the users. Additionally, the use of a virtual room and/or multiple virtual rooms depending on the situation are advantageous. Thus, virtual spaces may be used for grouping. For example, the object 10 may be displayed in a plurality of virtual spaces, each of the spaces containing the portion of the object 10 that is assignable to, for example, a particular topic and/or technology and/or organizational unit and/or other grouping criteria. Users can thus virtually walk through the rooms, searching for relevant content and marking sub-areas for processing. After such a tour, the respective user can pull his marked parts towards him, for example by gestures, so that each can be advantageously processed at the display device 14.

Furthermore, by hiding or disappearing the colors, it is not necessary to deselect irrelevant parts, as they are automatically released again after a while. The respective user can define a virtual room by a combination of selection criteria and reserve a whole room for himself. The respective user can further define the corresponding distribution of the parts of the object 10. The respective part of the object 10 or graph may be displayed in one space each for the user, and the spaces may be entered by other users or their avatars, respectively. Additionally or alternatively, the parts may further be displayed in other virtual spaces.

Further, it is advantageous for the method if the second user and/or another user can mark colored areas by the first user, whereby a query signal can be transmitted to the first user. In other words, users may request and/or visit a colleague's view. In doing so, a user can order an element occupied and colored by his colleague, and suggest changes for it. In addition to coloring, these areas contain, for example, a small sign or a mark in the form of a shadow, which has the color of the further user. After marking the request signal, the first user who processes the area is shown, for example, a suggestion for changes. Otherwise, if there is no suggestion, only the user who wants to process the part is displayed. If desired, the respective user can lend his color to a colleague for a certain time.

FIG 2 shows in a schematic view a system 20 which can be used for processing a graphically displayable object 10 by at least two users and which comprises at least one computing device 12, at least two display devices 14 separated from each other and at least two input devices 16 and 18. In this regard, the system 20 shown is configured to perform the method presented.

Thereby, both serve the particularly advantageous increase in effectiveness when processing the object 10. Whereby the increase in effectiveness is enabled in particular by different views of the same object 10 for different users. This makes it easier for the respective user to understand or grasp the graph, which makes updating the graphical representation faster and less error-prone.

Algorithmic methods of, for example, an AI recognize user preferences and/or user profiles and can thereby change settings for the user, such as preferred display styles and so on, which can also increase efficiency.

Elements of the graphical display can be marked with visual or virtual pheromones or colors, respectively, when a user touches or marks this part, for example by pointing to the respective area with a controller configured as a remote control. These pheromones or colors can have different intensities depending on how often the user processes the corresponding part. Furthermore, it can be observed how much time has passed since the last touch or processing. This type of locking element makes it possible to avoid conflicts during collaborative work by at least two users. This can make the work more effective and stable. In particular, the temporal nature of the color or pheromone makes collaborative work effective.

Copying parts of the respective object 10 may be particularly relevant for users, as gesture control in virtual spaces allows for quick visual adjustment of the focus or view for the respective user. All other participants can see their own grouping without affecting the focus of others. This is done, for example, in the user interface and thus in the display device 14 of the respective user.

The graph - the object 10 - or the information or data on which it is based are stored, for example, in an abstract form on a server or a server infrastructure. Thus, the method and the system 20 offer to collaborate by using cloud computing and thus by using a computing infrastructure.

The method provides a particularly advantageous method of "Visualization and Navigation through Graphical Representations Allowing Collaborative Processing for Concurrent Users". This enables a type of collaborative processing that can be useful, for example, during lectures and/or workshops and/or distance learning courses.

### Reference signs

- S1: first step
- S2: second step
- S3: third step
- S4: fourth step
- S5: fifth step
- 10: object
- 12: computing device
- 14: display device
- 16: first input device
- 18: second input device
- 20: system

## Claims

1. Method for processing a graphically representable object (10) by at least two users, comprising the steps:
- Importing a file containing the graphically displayable object by a computing device (12); (S1)
- Displaying at least a respective region of the object (10) on at least two separate display devices (14); (S2)
- Detecting, via a first input device (16), a user input performed by a first of said at least two users, wherein a portion of the object (10) is selected by that first user; (S3)
- Coloring the part and/or its surroundings in a color associated with the first user in the at least one further display device (14) of the at least one further user; (S4) and
- Blocking the area for processing through the at least one second user. (S5)

2. Method according to claim 1, **characterized in that** the color and/or the blocking disappear after a predetermined time and/or in dependence on a further user input by means of the first input device (16).

3. Method according to claim 1 or 2, **characterized in that** the at least two display devices (14) are configured as a VR headset and/or as an AR headset and thus the object (10) is displayed in a virtual space and/or in several virtual spaces and/or in at least one environment of the display devices (14) .

4. Method according to one of the previous claims, **characterized in that** the first input device (14) of the first user and/or at least one further input device (18) of a further one of the at least two users are each built as a controller and/or data glove.

5. Method according to claim 4, **characterized in that** the selecting of the part and/or at least one further part of the object (10) is performed by a gesture of the respective user with the respective input device (16, 18).

6. Method according to one of the previous claims, **characterized in that** the object (10) is a graph, in particular a knowledge graph, and/or a mind map and/or is written in the Unified Modeling Language and/or can be represented by at least two alternative representational forms.

7. Method according to claim 7, **characterized in that** the representation form and/or the color and/or a blocking time and/or an avatar and/or a virtual space for one of the users are selected by an AI method.

8. Method according to one of the previous claims, **characterized in that** the second user and/or another user can mark the part colored by the first user, whereby a request signal is transmitted to the first user.

9. System (20) for processing a graphically displayable object (10) by at least two users comprising at least one computing device (12), at least two display devices (14) separated from each other and at least two input devices (16,18), which is configured to perform the method according to one of the claims 1 to 8.

10. Computer program which is directly loadable into a memory of a computing device, comprising program means for executing the steps of the method according to any of claims 1 to 8 when the program is executed in the electronic computing device.

11. Storage medium having electronically readable control information stored on it comprising at least one computer program according to claim 10 and configured to perform a method according to one of the claims 1 to 8 when the storage medium is used in a computing device.
